Europäisches Patentamt

European Patent Office

Office européen des brevets

(19)

(11) Veröffentlichungsnummer: **0 289 536 B1**

(12) # EUROPÄISCHE PATENTSCHRIFT

(45) Veröffentlichungstag der Patentschrift: **07.04.93**

(51) Int. Cl.[5]: **G02C 7/02**

(21) Anmeldenummer: **87906911.0**

(22) Anmeldetag: **21.10.87**

(86) Internationale Anmeldenummer:
**PCT/DE87/00475**

(87) Internationale Veröffentlichungsnummer:
**WO 88/03277 (05.05.88 88/10)**

(54) **PROGRESSIVES BRILLENGLAS.**

(30) Priorität: **21.10.86 DE 3635777**

(43) Veröffentlichungstag der Anmeldung:
**09.11.88 Patentblatt 88/45**

(45) Bekanntmachung des Hinweises auf die
Patenterteilung:
**07.04.93 Patentblatt 93/14**

(84) Benannte Vertragsstaaten:
**AT BE CH DE FR GB IT LI LU NL SE**

(56) Entgegenhaltungen:
**EP-A- 0 039 497**
**WO-A-86/01308**
**FR-A- 2 584 823**
**FR-A- 2 588 672**
**GB-A- 2 100 877**

(73) Patentinhaber: **Optische Werke G. Rodenstock**
**Isartalstrasse 43**
**W-8000 München 5(DE)**

(72) Erfinder: **BARTH, Rudolf**
**Sommerweg 1**
**W-8061 Vierkirchen(DE)**
Erfinder: **PFEIFFER, Herbert**
**Georg-Hann-Str. 16**
**W-8000 München 60(DE)**

(74) Vertreter: **Münich, Wilhelm, Dr.**
**Kanzlei Münich, Steinmann, Schiller**
**Wilhelm-Mayr-Str. 11**
**W-8000 München 21 (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.10/3.5x/3.0.1)

## Beschreibung

### Technisches Gebiet

Die Erfindung bezieht sich auf ein progressives Brillenglas gemäß dem Oberbegriff des Patentanspruchs 1.

### Stand der Technik

Progressive Brillengläser gemäß dem Oberbegriff des Patentanspruch 1 mit einer zum Wirkungsanstieg beitragenden Fläche sind beispielsweise aus der DE-A 28 14 916, der DE-A 20 44 639 oder der DE-A 30 16 935 bekannt.

Bei progressiven Brillengläsern mit nur einer zum Wirkungsanstieg beitragenden Fläche wird die Akzeptanz durch den Brillenträger häufig dadurch beeinträchtigt, daß der sog. Progressionskanal, d.h. der Bereich, in dem die Wirkung ansteigt und der zum deutlichen Sehen geeignet ist, und der Nahteil bei den bekannten progressiven Brillengläsern so schmal sind, daß sie keinen Überblick über größere Bereiche ohne Kopfbewegungen gestatten.

Dies ist beispielsweise beim Arbeiten an Bildschirmgeräten störend, wenn abwechselnd der Bildschirminhalt und ein neben dem Schirm angeordneter Beleg betrachtet werden müssen.

Ein Brillenglas mit zwei zum Wirkungsanstieg beitragenden Flächen ist in der DE-A 34 30 334 bzw. in der prioritätsgleichen WO 86/01308 beschrieben. Auf diese Druckschriften sowie die DE-A 28 14 916 wird im übrigen bezüglich aller hier nicht im einzelnen erläuterten Begriffe sowie der Nennung weiterer Stands der Technik ausdrücklich Bezug genommen.

Bei dem in der DE-A 34 30 334 bzw. der WO 86/01308 beschriebenen Brillenglas ist der Hauptanteil des Astigmatismus in einen Bereich verlagert, in dem die Wirkung praktisch nicht ansteigt. Der in diesen Bereich verschobene Flächenastigmatismus wird durch den Flächenastigmatismus der anderen Fläche in diesem Bereich in wesentlichen kompensiert. Durch diese gegenseitige Kompenstation des Flächenastigmatismus sind die aus diesen Druckschriften bekannten Brillengläser mit gattungsgemäßen Brillengläsern nicht vergleichbar.

Eine progressive Halbbrille, d.h. ein Brillenglas ohne zur Fernsicht geeigneten Teil und damit ein Brillenglas anderer Gattung ist aus der DE-A 34 33 916 bekannt. Da bei diesem Brillenglas der zur Fernsicht gedachte Teil "weggeschnitten" wird, treten bei einem derartigen Brillenglas bei der Gestaltung der Progressionszone und des zur Nahsicht geeigneten Teils die durch die Anpassung dieser Teile an den zur Fernsicht geeigneten Teil bei gattungsgemäßen Brillengläsern hervorgerufenen Probleme nicht auf, so daß das aus der WO 86/01308 bekannte Brillenglas mit einem gattungsgemäßen Brillenglas nicht vergleichbar ist.

### Darstellung der Erfindung

Der Erfindung liegt die Aufgabe zugrunde, ein progressives Brillenglas derart weiterzubilden, daß insbesondere das Betrachten verschiedener und insbesondere nebeneinander angeordneter Bereiche ohne Kopfbewegungen möglich ist.

Eine erfindungsgemäße Lösung dieser Aufgabe ist mit ihren Weiterbildungen in den Patentansprüchen gekennzeichnet.

Erfindungsgemäß weist die progressive Fläche zusätzlich zu dem eigentlichen Hauptmeridian Linien auf, auf denen der Flächenastigmatismus einen lokalen Minimalwert hat, der so klein ist, daß sich für das Blicken in (angenähert) vertikaler Richtung mehr als ein Sehkanal ergibt.

Überraschenderweise hat es sich herausgestellt, daß die Akzeptanz von progressiven Brillengläsern insbesondere bei Einsatzfällen, in denen laufend unterschiedliche Bereiche betrachtet werden müssen, durch eine Ausbildung des Brillenglases mit mehreren Sehkanälen wesentlich stärker erhöht wird als bei einem Brillenglas, bei dem Nahteil und Progressionskanal im Rahmen des flächentheoretisch möglichen maximal verbreitert ist.

Vor allem aber ist es überraschend, daß es möglich ist, auf der begrenzten Fläche eines Brillenglases mehrere zum deutlichen Sehen geeignete Sehkanäle "unterzubringen", deren Fläche insgesamt größer ist als die Fläche des zum deutlichen Sehen geeigneten Bereichs bei einem Brillenglas mit herkömmlichen Aufbau, d.h. mit einem Progressionskanal und einem Nahteil. Erfindungsgemäß ist nämlich erkannt worden, daß der Satz von Minkwitz lediglich für den eine Nabellinie bzw. eine Quasinabellinie, d.h. ein Linie mit einem Astigmatismus ≦ etwa 0,25 dpt., umgebenden Bereich gilt und damit die Breite der Progressionszone sowie gegebenenfalls die des Nahteils beschränkt, daß aber andererseits der Satz von Minkwitz "keine Fernwirkung entfaltet", so daß es möglich ist, mehrere zum deutlichen Sehen geeignete Bereiche auf der Fläche eines Brillenglases nebeneinander anzuordnen.

Weiterbildungen der Erfindung sind in den Unteransprüchen angegeben:

Gemäß Anspruch 2 ist es besonders vorteilhaft, wenn sowohl nasal als auch temporal vom Hauptmeridian wenigstens eine einen weiteren Sehkanal bildende Linie vorgesehen ist. Die Linien müssen dabei nicht exakt parallel zum Hauptmeridian verlaufen; im Gegenteil, besonders vorteilhaft ist es, wenn der Verlauf der Linien der von oben nach unten gerichteten Augenbewegung "angepaßt" ist, und die Linien nasal und temporal so ausgebildet sind, daß sie ein ungestörtes binokulares Sehen ermöglichen: Damit ist insbesondere gemeint, daß die Sehstrahlen bei einer angenähert vertikalen Augenbewegung für beide Augen gleichzeitig durch die Sehkanäle bildenden Linien verlaufen. Dies bedeutet insbesondere, daß die die Sehkanäle bildenden Linien die progressive Fläche(n) in eine Reihe von unterschiedlichen Flächenteilen zerlegen, und daß die Fläche nicht zum Hauptmeridian symmetrisch sein muß:

Beispielsweise weist eine progressive Fläche mit einer temporalen und einer nasalen Linie, auf der der Flächenastigmatismus einen lokalen Minimalwert hat, i.a. vier unterschiedliche Flächenteile und zwar einen inneren nasalen, einen inneren temporalen, einen äußeren nasalen und einen äußeren temporalen Bereich auf.

Dabei ist es bevorzugt, wenn der Flächenastigmatismus auf den seitlichen Linien kleiner/gleich 0,5 dpt oder gemäß Anspruch 3 sogar kleiner/gleich 0,25 dpt ist, d.h. die Linie Nabellinien bzw. Quasinabellinien sind.

Das binokulare Sehen insbesondere im Bereich der weiteren Sehkanäle läßt sich durch die im Anspruch 4 gekennzeichnete Ausbildung noch weiter verbessern, durch die sichergestellt ist, daß die Sehstrahlen beim konvergierenden Blicken durch Bereiche mit gleichen optischen Eigenschaften gehen.

In den Ansprüchen 5 und folgende sind vorteilhafte Ausbildungen der erfindungsgemäßen Fläche(n) gekennzeichnet, die zu ausgewogenen Flächeneigenschaften hinsichtlich der verschiedenen Bildfehler, wie Flächenastigmatismus, Gesamtastigmatismus unter Einschluß von Astigmatismus schiefer Bündel, Verzeichnung etc. führen. Darüberhinaus haben die in den Ansprüchen 5 folgende angegebenen Gleichungen den Vorteil, daß sie die Berechnung einer längs vertikaler bzw. nahezu vertikaler Linien ohne Unstetigkeitsstellen zusammengesetzter Fläche ermöglichen.

In vielen Fällen erhält man bereits eine befriedigende Akzeptanz, wenn eine Fläche mit insgesamt zwei zusätzlichen Sehkanälen und ebenem Hauptmeridian verwendet wird.

## Kurze Beschreibung der Zeichnung

Die Erfindung wird nachstehend anhand eines Ausführungsbeispiels unter Bezugnahme auf die Zeichnung näher beschrieben, in der zeigen:

| | |
|---|---|
| Fig. 1a | schematisch eine Aufsicht auf ein erfindungsgemäßes Brillenglas, in die die Lage der verschiedenen angenähert vertikal verlaufenden Sehkanäle eingetragen ist, |
| Fig. 1b und c | schematisch die Lage der Zylinderachsen für eine Fläche mit vier verschiedenen Flächenteilen, |
| Fig. 2a und b | tabellarisch die Krümmungsradien in zueinander parallelen Horizontalschnitten für ein numerisches Ausführungsbeispiel. |
| Fig. 3a und b | die Pfeilhöhen des Ausführungsbeispiels gemäß Fig.2, |
| Fig. 4 | den Hauptmeridian des Ausführungsbeispiels gemäß Fig. 2, und |
| Fig. 5 | den Flächenastigmatismus des Ausführungsbeispiels gemäß Fig. 2a bzw. b. |

## Darstellung von Ausführungsbeispielen

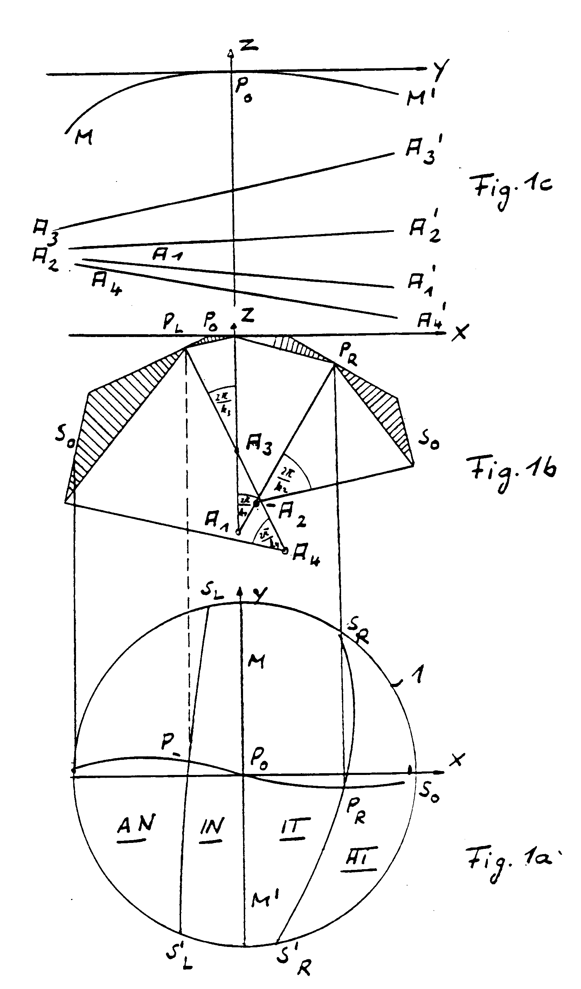

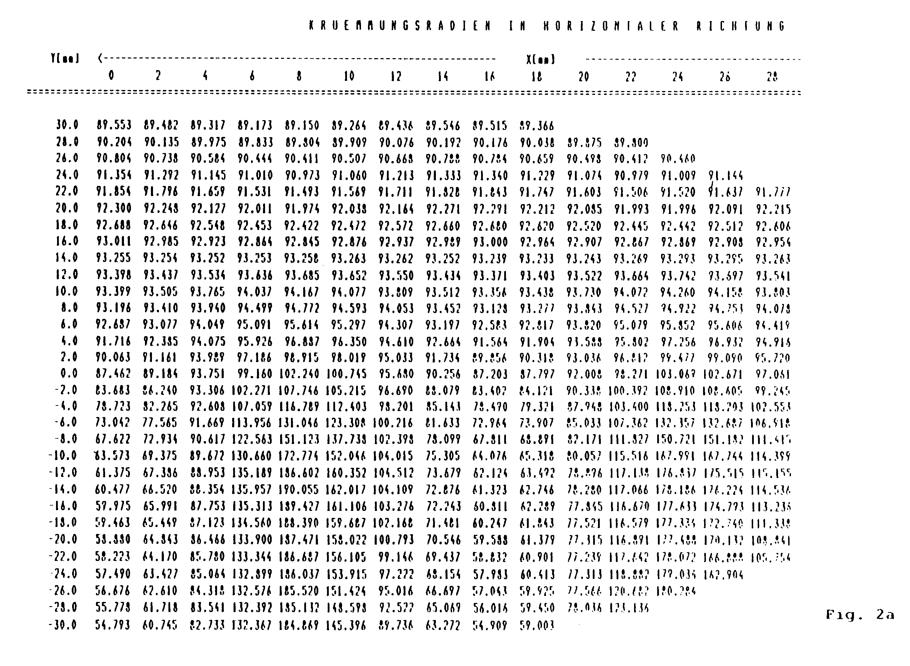

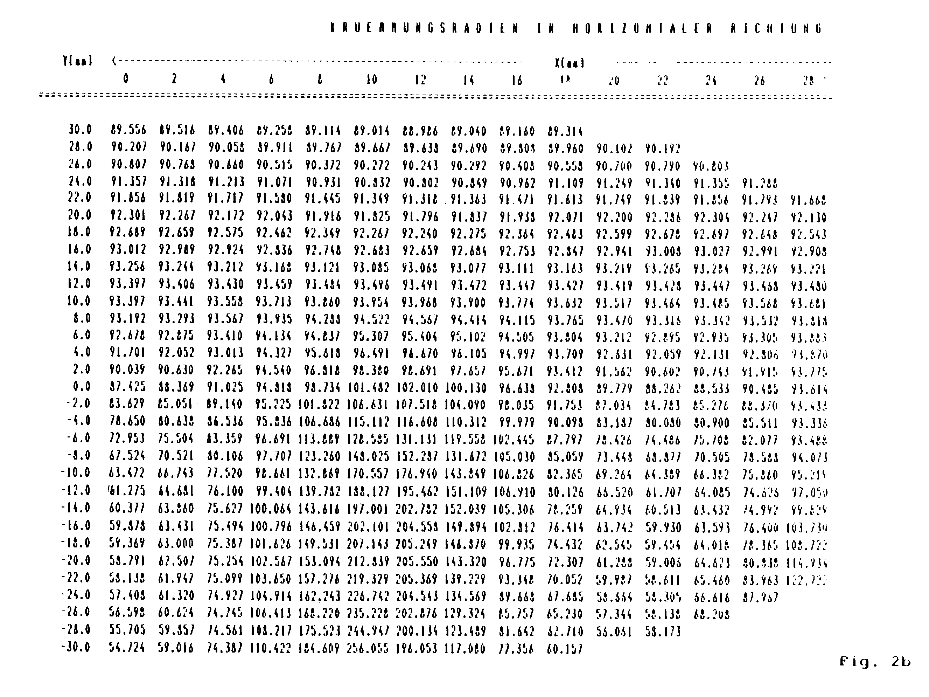

Fig. 1a zeigt eine Aufsicht auf ein erfindungsgemäßes "rohrrundes" Brillenglas 1, d.h. ein Brillenglas vor dem Einschleifen in eine Brillenfassung mit einer progressiven konvexen Vorderfläche. Die augenseitige Fläche kann in bekannter Weise eine sphärische, asphärische, torische oder atorische Fläche sein. Ferner kann das Brillenglas ein Dickenreduktionsprisma aufweisen, wie dies bei progressiven Brillengläsern Stand der Technik ist.

Die progressive Vorderfläche des erfindungsgemäßen Brillenglases weist auf beiden Seiten des Hauptmeridians MM' jeweils eine den Hauptmeridian MM' nicht schneidende Linie $S_R S'_R$ bzw $S_L S'_L$ auf, auf der der Flächenastigmatismus einen lokalen Minimalwert hat. Diese beiden Linien sowie der Hauptmeridian unterteilen die progressive Fläche in vier Bereiche, nämlich einen inneren nasalen Bereich IN, einen inneren temporalen Bereich IT, einen äußeren nasalen Bereich AN und einen äußeren temporalen Bereich AT.

Zusätzlich ist in Fig. 1a das im folgenden verwendete x/y-Koordinatensystem eingezeichnet.

Bei dem gezeigten Ausführungsbeispiel lassen sich die einzelnen Flächenteile IN, IT, AN, und AT jeweils in einem Zylinderkoordinatensystem beschreiben, wobei die Zylinderachsen $A_iA'_i$ (i = 1,..4) der den einzelnen Flächenteilen zugeordneten Koordinatensystemen im allgemeinen zueinander windschief sind. In den Fig. 1b und 1c ist die Lage der Zylinderachsen $A_iA'_i$ eingezeichnet.

Ausdrücklich wird darauf hingewiesen werden, daß in Fig. 1b kein Horizontalschnitt dargestellt ist, sondern diese Figur räumlich zu verstehen ist: Die Lage der in Fig. 1b eingezeichneten Punkte auf dem Brillenglas ist Fig. 1a zu entnehmen.

Jeder der vier Flächenteile (i) genügt bezogen auf das dem jeweiligen Flächenteil zugeordneten Zylinderkoordinatensystem ($Y_i$, $\rho_i$,$\Phi_i$) der folgenden Gleichung:

$$
\begin{aligned}
\zeta_i(\Phi_i,Y_i) = {} & f_i(Y_i) + g_i(Y_i)/k_i2 * (1 - \cos k_i(\Phi_i - \Phi_{io})) \\
& + h_i(Y_i)/k_i * \sin k_i(\Phi_i - \Phi_{io}) \\
& + \sum_{n=2} a_{in} * (1 - \cos k_i(\Phi_i - \Phi_{io}))^n \\
& + \sum_{n=1} b_{i,2n+1} * \sin^{2n+1} k_i(\Phi_i - \Phi_{io}).
\end{aligned}
$$

mit i = 1,2,3,4
und

$f_i(y_i) = \rho_i (\Phi = \Phi_{io},y)$

$g_i(y_i) = \delta^2 \rho_i / \delta^2 \Phi_i \mid \Phi_i = \Phi_{io}$

$h_i(y_i) = \delta \rho_i / \delta \Phi \mid \Phi_i = \Phi_{io}$

Ferner ist in Fig. 1b schraffiert der Bereich eingezeichnet, innerhalb dem die Funktion $\rho(\Phi,y)$ verlaufen muß, damit sich eine konvexe Fläche ohne Krümmungsumkehr ergibt.

Bei dem in den Fig. 1a bis 1c dargestellten Ausführungsbeispiel weisen die einzelnen Flächenteile sowohl unterschiedliche Periodenzahlen $k_i$ als auch unterschiedliche Zylinderachsen $A_iA'_i$ auf. Hierdurch können seitliche Sehkanäle erhalten werden, die entsprechend der Augenbewegung gegeneinander gedreht und verschoben sind, so daß sich hervorragende binokulare Seheigenschaften ergeben.

Eine Asymmetrie der Lage der einzelnen Sehkanäle kann aber auch bereits durch Zusammensetzen der Gesamtfläche aus zwei Flächenteilen erreicht werden, die zweimal stetig differenzierbar längs der zentralen (Quasi-)Nabellinie aneinanderstoßen. Werden die beiden Flächenteile auf das gleiche Zylinderkoordinaten bezogen, kann die Asymmetrie durch verschiedene k-Werte erhalten werden.

Ausdrücklich wird aber darauf hingewiesen, daß die Beschreibung der Fläche in (mehreren) Zylinderkoordinatensystemen eine nicht zwangsläufige, sondern lediglich eine vorteilhafte Art der Flächenbeschreibung ist, die bei dem dargestellten Ausführungsbeispiel gewählt worden ist. Selbstverständlich ist es möglich, die erfindungsgemäß ausgebildete Fläche bzw. Flächen auch anders zu berechnen, beispielsweise mit Splinefunktionen.

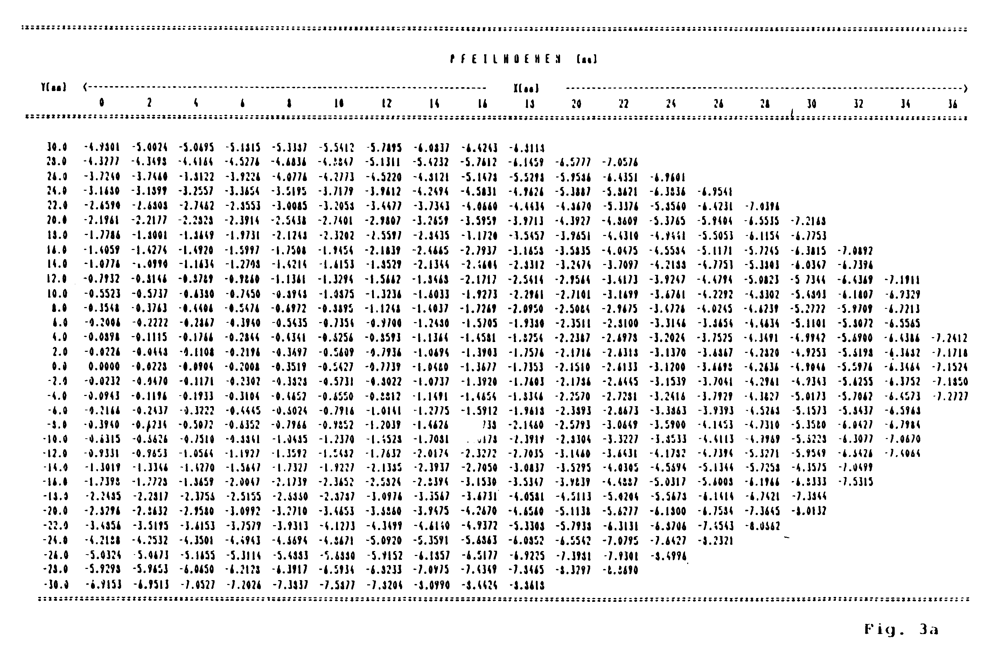

In den Fig. 2a bzw. 2b ist numerisch ein weiteres Ausführungsbeispiel der Erfindung dargestellt. Bei diesem Ausführungsbeispiel fallen die Zylinderachsen $A_1A'_1$ und $A_2A_2$ bzw. $A_3A'_3$ und $A_4A'_4$ zusammen. Ferner sind der Hauptmeridian MM' und die seitlichen Sehkanäle Nabellinien, d.h. der Flächenastigmatismus entlang dieser Linien ist (rechnerisch) Null.

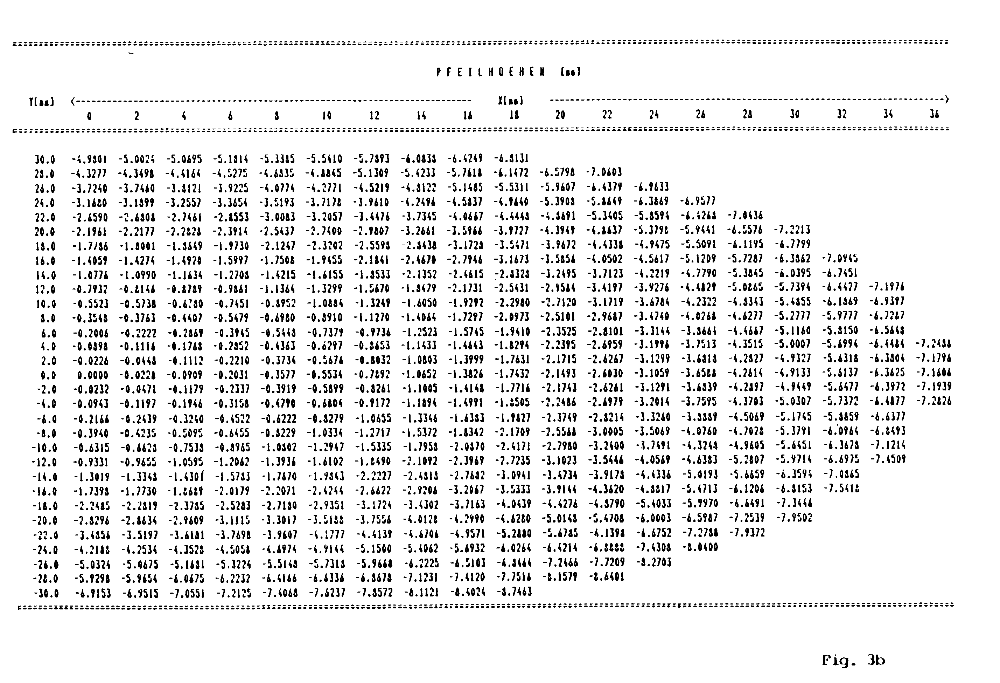

Die Tabelle in Fig. 2a gibt die Krümmungsradien von Horizontalschnitten, d.h. von Schnitten der Fläche mit horizontalen Ebenen für den Bereich "nasal" vom Hauptmeridian wieder, während die Tabelle in Fig. 2b die Krümmungsradien von Horizontalschnitten für den "temporalen" Bereich wiedergibt. Zusätzlich sind in Fig. 3a bzw. 3b die "nasalen" (nasenseitigen) und "temporalen" (schläfenseitigen) Pfeilhöhen, d.h. den Abstand der Fläche von einer die Fläche im Scheitelpunkt berührenden Ebene, für dieses Ausführungsbeispiel angegeben.

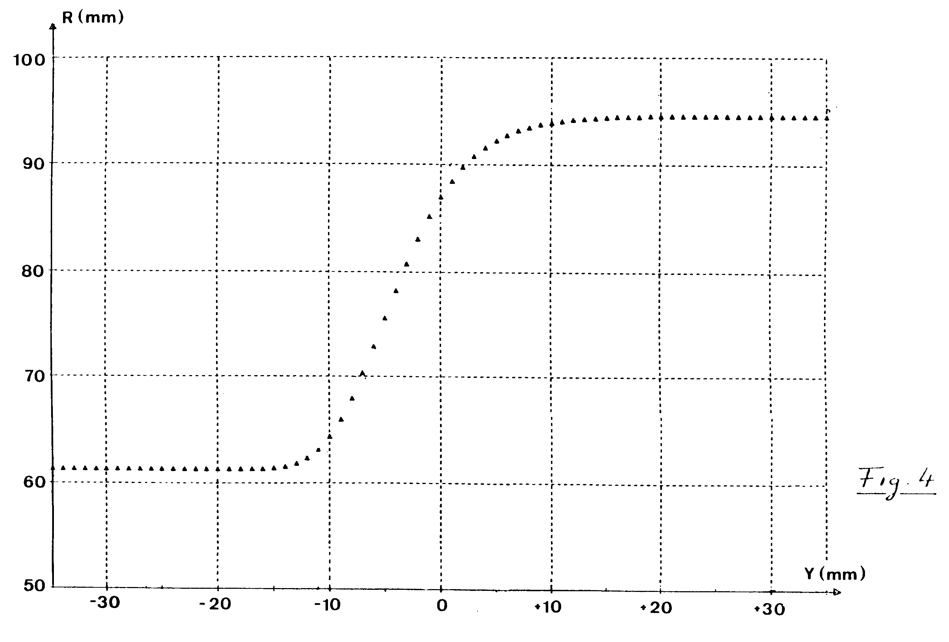

In Fig. 4 ist der Verlauf der Krümmungsradien des Hauptmeridians dieses Ausführungsbeispiels dargestellt. Wie man sieht, ist im Fernteil FT und im Nahteil NT - in an sich bekannter Weise - die Wirkung konstant und steigt in der Progressionszone PZ von der Fernteil-Flächenbrechkraft (5 dpt) auf die Nahteil-Flächenbrechkraft (8 dpt.) an.

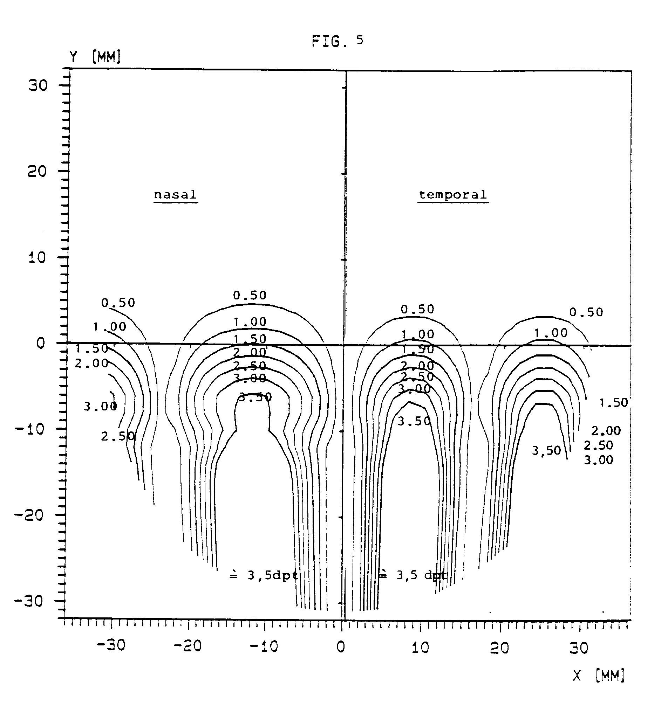

Fig. 5 zeigt den Verlauf des Flächenastigmatismus für die in Fig. 2a bzw. 2b numerisch angegebenen Flächenteile. Wie man Fig. 5 entnimmt, ist der Abstand des nasalen Sehkanals vom Hauptmeridian größer als der Abstand des temporalen Sehkanals, so daß beim seitlichen Blicken beide Sehstrahlen durch den jeweiligen Sehkanal verlaufen und ein ungestörtes binokulares Sehen ermöglicht wird. Darüberhinaus ist Fig. 5 zu entnehmen, daß die seitlichen Sehkanäle, d.h. die Bereiche, in denen typischerweise der Flächenastigmatismus ≦ 0,5 dpt ist, vergleichbar groß wie der eigentliche zentrale Sehkanal, d.h. die Progressionszone und der Nahteil sind. Insgesamt ist die Fläche der zum deutlichen Sehen geeigneten Bereiche, d.h. der Bereiche, deren Flächenastigmatismus ≦ 0,5 dpt. ist, wesentlich größer als bei einem Brillenglas, bei dem die Berechnung auf eine möglichst breite Progressionszone und einen möglichst großen Nahteil optimiert ist. Ferner ist der große Fernteil bemerkenswert, in den die zentrale Progressionszone und die seitlichen Sehkanäle münden !

Vorstehend ist die Erfindung exemplarisch anhand von Ausführungsbeispielen ohne Beschränkung des allgemeinen Erfindungsgedankens - zusätzlich zum Hauptmeridian weitere annähernd vertikal verlaufende Sehkanäle zu schaffen - beschrieben worden. Innerhalb dieses allgemeinen Erfindungsgedankens sind selbstverständlich die verschiedensten Modifikationen gegenüber den dargestellten Ausführungsbeispielen möglich:

Beispielsweise können der Hauptmeridian und/oder die seitlichen Sehkanäle nicht nur Nabellinien sein; entlang dieser Linien kann auch ein gewisser Flächenastigmatismus auftreten. Dieser Flächenastigmatismus kann Werte bis zu 0,5 dpt., bevorzugt bis zu 0,25 dpt erreichen. Weiterhin kann der in den zum deutlichen Sehen ausgelegten Bereichen auftretende Flächenastigmatismus so bemessen sein, daß er den Astigmatismus schiefer Bündel ganz oder teilweise kompensiert.

Ferner können der Hauptmeridian und/oder die seitlichen Sehkanäle nicht nur ebene oder nahezu ebene Kurven sein, der Hauptmeridian und/oder die Sehkanäle können auch gewundene Kurven sein, so daß ihr Verlauf der Blicklinie bei vertikalen Augenbewegungen folgt.

Die vorstehenden erfindungsgemäßen Überlegungen gelten selbstverständlich auch bei einem Brillenglas, bei dem die augenseitige Fläche progressiv ausgebildet ist.

Auch ist die Beschreibung in einem Zylinderkoordinatensystem für die Berechnung der Flächen nicht erforderlich, es können auch andere Berechnungsmethoden - beispielsweise Spline-Funktionen -verwendet werden. Ausdrücklich wird aber darauf hingewiesen, daß die im Anspruch 5 angegebenen Beziehungen nicht nur eine vergleichsweise einfache Berechnung der Fläche erlauben, sondern durch die beanspruchten Beziehungen eine ausgewogene Fläche mit hervorragenden Eigenschaften gewährleistet ist.

**Patentansprüche**

1. Progressives Brillenglas mit einer konvexen Vorderfläche und einer konkaven Innenfläche, von denen eine so geformt ist, daß sich beim Übergang von einem zur Fernsicht geeigneten Teil zu einem zur Nahsicht geeigneten Teil entlang eines ebenen oder gewundenen Hauptmeridians innerhalb einer Progressionszone ein Anstieg der Brechkraft ergibt, entlang dem der Gesamtastigmatismus ≦ 0,5 dpt ist, und die andere Fläche eine sphärische, asphärische, torisch oder atorische Fläche ist, die nicht zum Brechkraftanstieg beiträgt,
dadurch **gekennzeichnet**, daß die andere Fläche nicht zur Kompensation des Flächenastigmatismus der den Brechkraftanstieg erzeugenden Fläche beiträgt, und
daß zur Bildung weiterer Sehkanäle ($S_R S'_R$, $S_L S'_L$) die den Brechkraftanstieg erzeugende Fläche solchermaßen ausgebildet ist, daß auf dieser wenigstens eine weitere, den Hauptmeridian nicht schneidende und vom Fernteil zum gegenüberliegenden Rand des Brillenglases verlaufende Linie aufweist, entlang der der Flächenastigmatismus einen lokalen Minimalwert hat und ≦ 0,5 dpt. ist.

2. Brillenglas nach Anspruch 1,
dadurch **gekennzeichnet**, daß nasal und temporal wenigstens je eine Linie vorgesehen sind, entlang der der Flächenastigmatismus einen lokalen Minimalwert hat und ≦ 0,5 dpt. ist.

3. Brillenglas nach Anspruch 1 oder 2,
dadurch **gekennzeichnet**, daß der Hauptmeridian und/oder die weiteren Linien Nabellinien oder Linien mit einem Flächenastigmatismus ≦ 0,25 dpt. sind.

4. Brillenglas nach einem der Ansprüche 1 bis 3,
dadurch **gekennzeichnet**, daß bei einem Brillenglas in "Gebrauchsstellung" die weiteren Linien derart in Bezug auf den Hauptmeridian verlaufen, daß sich beim binokularen Sehen in einander endsprechenden Durchblickpunkten zumindest angenähert gleiche Eigenschaften, insbesondere hinsichtlich Brechwert, Flächenastigmatismus, prismatische Wirkungen etc. haben.

5. Brillenglas nach einem der Ansprüche 1 bis 4,
dadurch **gekennzeichnet**, daß die zum Wirkungsanstieg beitragende Fläche (r + 2) Flächenteile aufweist, die längs r weiterer Linien zweimal stetig differenzierbar zusammengesetzt sind, und
daß jeder Flächenteil in einem ihm zugeordneten Zylinderkoordinatensystem ($y_i$, $\rho_i$, $\Phi_i$) der folgenden Gleichung genügt:

$$\rho_i(\Phi_i, y_i) = f_i(y_i) + g_i(y_i)/k_i{}^2 * (1 - \cos k_i(\Phi_i - \Phi_{io}))$$
$$+ h_i(y_i)/k_i * \sin k_i(\Phi_i - \Phi_{io})$$
$$+ \sum_{n=2} a_{in} * (1 - \cos k_i(\Phi_i - \Phi_{io}))^n$$
$$+ \sum_{n=1} b_{i,2n+1} * \sin^{2n+1} k_i(\Phi_i - \Phi_{io}).$$

mit i = 1,2...r,
und

$f_i(y_i) = \rho_i (\Phi = \Phi_{io}, y)$
$g_i(y_i) = \delta^2 \rho_i / \delta^2 \Phi_i \mid \Phi_i = \Phi_{io}$
$h_i(y_i) = \delta \rho_i / \delta \Phi \mid \Phi_i = \Phi_{io}$

wobei
$\Phi_{io}$ der Ausgangswinkel des Zylinderkoordinatensystems, und
$a_{in}$, $b_{in}$ Reihenkoeffizienten sind.

6. Brillenglas nach Anspruch 5,
dadurch **gekennzeichnet**, daß die Zahl r der weiteren Linien 2 ist.

7. Brillenglas nach Anspruch 5 oder 6,
dadurch **gekennzeichnet**, daß jeder Flächenteil auf das gleiche Zylinderkoordinatensystem bezogen ist.

8. Brillenglas nach einem der Ansprüche 5 bis 7,
dadurch **gekennzeichnet**, daß der Hauptmeridian eben ist ($\Phi_{io}$ = 0).

9. Brillenglas nach Anspruch 8,
dadurch **gekennzeichnet**, daß die Zylinderachse in der Ebene des Hauptmeridians liegt.

**Claims**

1. A progressive spectacle lens with a convex front surface and a concave back surface, of which one is formed in such a way that at the transition from a portion suitable for distance vision to a portion suitable for near vision along a smooth or twisted main meridian an increase in the surface power within a progressive corridor is produced along which the total astigmatism is ≤ 0.5 D, and the other surface is a spherical, aspheric, toric or atoric surface which does not contribute to the increase in surface power, **characterised** by the fact that the other surface does not contribute to the compensation of the surface astigmatism of the surface generating the surface power increase, and
by the fact that for the formation of further vision channels ($S_RS'_R$, $S_LS'_L$,) the surface generating the surface power increase is designed in such a way that on this at least one further line exists which does not intersect the main meridian and which runs from the distance portion to the rim of the spectacle lens lying opposite and along which the surface astigmatism has a local minimal value and is ≤ 0.5 D.

2.  A spectacle lens in accordance with Claim 1,
    **characterised** by the fact that nasally and temporally at least one line each is provided along which the surface astigmatism has a local minimal value and is $\leq 0.5$ D.

3.  A spectacle lens in accordance with Claim 1 or 2,
    **characterised** by the fact that the main meridian and/or the further lines are umbilic lines or lines with a surface astigmatism of $\leq 0.25$ D.

4.  A spectacle lens in accordance with any of the Claims 1 to 3,
    **characterised** by the fact that for a spectacle lens in the "position of wear" the further lines run in such a way with reference to the main meridian that for binocular vision at corresponding vision points they have at least approximately equal properties, in particular as regards surface power, surface astigmatism, prismatic powers, etc.

5.  A spectacle lens in accordance with any of the Claims 1 to 4,
    **characterised** by the fact that the surface $(r + 2)$ contributing to the power increase possesses surface parts which along r of further lines are composed twice perpetually differentiably, and
    that each surface part satisfies the following equation in a cylinder coordinate system $(y_i, \rho_i, \Phi_i)$ allocated to it:

$$
\begin{aligned}
\rho_i(\Phi_i, y_i) \quad = \quad & f_i(y_i) + g_i(y_i)/k_i^2 * (1 - \cos k_i(\Phi_i - \Phi_{io})) \\[1em]
+ \quad & h_i(y_i)/k_i * \sin k_i(\Phi_i - \Phi_{io}) \\[1em]
+ \quad & \sum_{n=2} a_{in} * (1 - \cos k_i(\Phi_i - \Phi_{io}))^n \\[1em]
+ \quad & \sum_{n=1} b_{,2n+1} * \sin^{2n+1} k_i(\Phi_i - \Phi_{io})
\end{aligned}
$$

with i = 1,2...3
and

$f_i(y_i) = \rho_i(\Phi = \Phi_{io}, y)$
$g_i(y_i) = \delta^2 \rho_i/\delta^2 \Phi_i \mid \Phi_i = \Phi_{io}$
$h_i(y_i) = \delta \rho_i/\delta \Phi \mid \Phi_i = \Phi_{io}$

where
$\Phi_{io}$ is the starting angle of the cylinder coordinate system, and
$a_{in}$, $b_{in}$ are series coefficients.

6.  A spectacle lens in accordance with Claim 5,
    **characterised** by the fact that the number r of the further lines is 2.

7.  A spectacle lens in accordance with Claim 5 or 6,
    **characterised** by the fact that each surface part is referred to the same cylinder coordinate system.

8.  A spectacle lens in accordance with any of the Claims 5 to 7,
    **characterised** by the fact that the main meridian is smooth ($\Phi_{io} = 0$).

9.  A spectacle lens in accordance with Claim 8,
    **characterised** by the fact that the cylinder axis is situated in the plane of the main meridian.

**Revendications**

1. Verre de lunette progressif comprenant une surface avant convexe et une surface interne concave, dont l'une est formée de manière que dans la transition entre la partie convenant à la vision lointaine et la partie convenant à la vision rapprochée ait lieu une augmentation du pouvoir réfringent le long d'un méridien principal plan ou sinueux et à l'intérieur d'une zone de progression, le long duquel l'astigmatisme d'ensemble ≤ 0,5 δ, et l'autre surface est une surface sphérique, torique ou atorique qui ne contribue pas à l'augmentation du pouvoir réfringent,

caractérisé en ce que l'autre surface ne contribue pas à la compensation de l'astigmatisme de la surface provoquant l'augmentation du pouvoir réfringent, et

en ce que pour former d'autres canaux de vision ($S_R S'_R$, $S_L S'_L$),la surface provoquant l'augmentation du pouvoir réfringent est constituée de manière qu'elle comprenne au moins une autre ligne ne coupant pas le méridien principal et allant de la partie pour vision lointaine jusqu'au bord opposé du verre de lunette, le long de laquelle l'astigmatisme de surface présente une valeur locale minimale et soit ≤ 0,5 δ.

2. Verre de lunette selon la revendication 1,
caractérisé en ce qu'il est prévu respectivement sur le côté nasal et sur le côté temporal au moins une ligne le long de laquelle l'astigmatisme de surface a une valeur locale minimale et ≤ 0 5 δ.

3. Verre de lunette selon la revendication 1 ou 2,
caractérisé en ce que le méridien principal et/ou les autres lignes sont des lignes ombilicales ou des lignes dont l'astigmatisme de surface ≤ 0,25 δ.

4. Verre de lunette selon l'une quelconque des revendications 1 à 3, caractérisé en ce que dans un verre de lunette en "position d'utilisation", les autres lignes sont orientées par rapport au méridien principal de manière à présenter pendant la vision binoculaire des propriétés approximativement égales, en particulier en ce qui concerne le pouvoir réfringent, l'astigmatisme de surface, les effets prismatiques, etc., en des points de vision se correspondant les uns les autres.

5. Verre de lunette selon l'une quelconque des revendications 1 à 4, caractérisé en ce que la surface contribuant à l'augmentation de la puissance comprend (r + 2) sections de surface qui se combinent chaque fois par deux et de façon continuellement différenciable le long de r autres lignes, et

en ce que l'équation suivante suffit à chaque section de surface dans un système de coordonnées cylindriques ($y_i$, $\rho_i$, $\Phi_i$) associé à chacune d'elles:

$$\rho_i(o_i, y_i) = f_i(Y_i) + g_i(y_i)/k_i2 * (1 - \cos k_i(\phi_i - \phi_{io}))$$
$$+ h_i(y_i)/k_i * \sin k_i (\phi i - \phi_{io})$$
$$+ \sum_{n=2} a_{in} * (1 - \cos k_i (\phi_i - \phi_{io}))^n$$
$$+ \sum_{n=1} b_{i,2n+1} * \sin^{2n+1} k_i (\phi_i - \phi_{io})$$

avec i = 1, 2, 3, 4
et

$f_i(y_i) = \rho_i (\Phi = \Phi_{i\Phi}, y)$
$g_i(y_i) = \delta^2 \rho_i / \delta^2 \Phi_i | \Phi_i = \Phi_{io}$
$h_i(y_i) = \delta \rho_i / \delta\Phi | \Phi_i = \Phi_{io:}$

où
$\Phi_{io}$ représente l'angle de sortie du système de coordonnées cylindrique, et
$a_{in}$, $b_{in}$ des coefficients de série.

6. Verre de lunette selon la revendication 5,
caractérisé en ce que le nombre r des autres lignes est de 2.

7.   Verre de lunette selon la revendication 5 ou 6,
     caractérisé en ce que chaque section de surface est rapportée au même système de coordonnées cylindriques.

8.   Verre de lunette selon l'une quelconque des revendications 5 à 7, caractérisé en ce que le méridien principal est plan ($o_{io}$ = 0).

9.   Verre de lunette selon la revendication 8,
     caractérisé en ce que l'axe de cylindre est situé dans le plan du méridien principal.

Fig. 1c

Fig. 1b

Fig. 1a

KRUEMMUNGSRADIEN IN HORIZONTALER RICHTUNG

| Y[mm] | 0 | 2 | 4 | 6 | 8 | 10 | 12 | 14 | 16 | X[mm] 18 | 20 | 22 | 24 | 26 | 28 |
|---|---|---|---|---|---|---|---|---|---|---|---|---|---|---|---|
| 30.0 | 89.553 | 89.482 | 89.317 | 89.173 | 89.150 | 89.264 | 89.436 | 89.546 | 89.515 | 89.366 | | | | | |
| 28.0 | 90.204 | 90.135 | 89.975 | 89.833 | 89.804 | 89.909 | 90.076 | 90.192 | 90.176 | 90.038 | 89.875 | 89.800 | | | |
| 26.0 | 90.804 | 90.738 | 90.584 | 90.444 | 90.411 | 90.507 | 90.668 | 90.788 | 90.784 | 90.659 | 90.498 | 90.412 | 90.460 | | |
| 24.0 | 91.354 | 91.292 | 91.145 | 91.010 | 90.973 | 91.060 | 91.213 | 91.333 | 91.340 | 91.229 | 91.074 | 90.979 | 91.009 | 91.144 | |
| 22.0 | 91.854 | 91.796 | 91.659 | 91.531 | 91.493 | 91.569 | 91.711 | 91.828 | 91.843 | 91.747 | 91.603 | 91.506 | 91.520 | 91.637 | 91.777 |
| 20.0 | 92.300 | 92.248 | 92.127 | 92.011 | 91.974 | 92.038 | 92.164 | 92.271 | 92.291 | 92.212 | 92.085 | 91.993 | 91.996 | 92.091 | 92.215 |
| 18.0 | 92.688 | 92.646 | 92.548 | 92.453 | 92.422 | 92.472 | 92.572 | 92.660 | 92.680 | 92.620 | 92.520 | 92.445 | 92.442 | 92.512 | 92.606 |
| 16.0 | 93.011 | 92.985 | 92.923 | 92.864 | 92.845 | 92.876 | 92.937 | 92.989 | 93.000 | 92.964 | 92.907 | 92.867 | 92.869 | 92.908 | 92.954 |
| 14.0 | 93.255 | 93.254 | 93.252 | 93.253 | 93.258 | 93.263 | 93.262 | 93.252 | 93.239 | 93.233 | 93.243 | 93.269 | 93.293 | 93.295 | 93.263 |
| 12.0 | 93.398 | 93.437 | 93.534 | 93.636 | 93.685 | 93.652 | 93.550 | 93.434 | 93.371 | 93.403 | 93.522 | 93.664 | 93.742 | 93.697 | 93.541 |
| 10.0 | 93.399 | 93.505 | 93.765 | 94.037 | 94.167 | 94.077 | 93.809 | 93.512 | 93.356 | 93.438 | 93.730 | 94.072 | 94.260 | 94.158 | 93.803 |
| 8.0 | 93.196 | 93.410 | 93.940 | 94.499 | 94.772 | 94.593 | 94.053 | 93.452 | 93.128 | 93.277 | 93.843 | 94.527 | 94.922 | 94.753 | 94.078 |
| 6.0 | 92.687 | 93.077 | 94.049 | 95.091 | 95.614 | 95.297 | 94.307 | 93.197 | 92.583 | 92.817 | 93.820 | 95.079 | 95.852 | 95.606 | 94.419 |
| 4.0 | 91.716 | 92.385 | 94.075 | 95.926 | 96.887 | 96.350 | 94.610 | 92.664 | 91.564 | 91.904 | 93.588 | 95.802 | 97.256 | 96.932 | 94.918 |
| 2.0 | 90.063 | 91.161 | 93.989 | 97.186 | 98.915 | 98.019 | 95.033 | 91.734 | 89.856 | 90.318 | 93.036 | 96.812 | 99.477 | 99.090 | 95.720 |
| 0.0 | 87.462 | 89.184 | 93.751 | 99.160 | 102.240 | 100.745 | 95.680 | 90.256 | 87.203 | 87.797 | 92.008 | 98.271 | 103.067 | 102.671 | 97.061 |
| -2.0 | 83.683 | 86.240 | 93.306 | 102.271 | 107.746 | 105.215 | 96.690 | 88.079 | 83.407 | 84.121 | 90.338 | 100.392 | 108.910 | 108.605 | 99.245 |
| -4.0 | 78.723 | 82.265 | 92.608 | 107.059 | 116.789 | 112.403 | 98.201 | 85.143 | 79.470 | 79.321 | 87.948 | 103.400 | 118.253 | 118.293 | 102.553 |
| -6.0 | 73.042 | 77.565 | 91.669 | 113.956 | 131.046 | 123.308 | 100.216 | 81.633 | 72.964 | 73.907 | 85.033 | 107.362 | 132.357 | 132.687 | 106.918 |
| -8.0 | 67.622 | 72.934 | 90.617 | 122.563 | 151.123 | 137.738 | 102.398 | 78.099 | 67.811 | 68.891 | 82.171 | 111.827 | 150.721 | 151.182 | 111.415 |
| -10.0 | 63.573 | 69.375 | 89.672 | 130.660 | 172.774 | 152.046 | 104.015 | 75.305 | 64.076 | 65.318 | 80.057 | 115.516 | 167.991 | 167.744 | 114.399 |
| -12.0 | 61.375 | 67.386 | 88.953 | 135.189 | 186.602 | 160.352 | 104.512 | 73.679 | 62.124 | 63.492 | 78.876 | 117.138 | 176.837 | 175.515 | 115.155 |
| -14.0 | 60.477 | 66.520 | 88.354 | 135.957 | 190.055 | 162.017 | 104.109 | 72.876 | 61.323 | 62.746 | 78.280 | 117.066 | 178.186 | 176.224 | 114.536 |
| -16.0 | 59.975 | 65.991 | 87.753 | 135.313 | 189.427 | 161.106 | 103.276 | 72.243 | 60.811 | 62.289 | 77.845 | 116.670 | 177.633 | 174.793 | 113.236 |
| -18.0 | 59.463 | 65.449 | 87.123 | 134.560 | 188.390 | 159.687 | 102.168 | 71.481 | 60.247 | 61.843 | 77.521 | 116.579 | 177.334 | 172.740 | 111.338 |
| -20.0 | 58.880 | 64.843 | 86.466 | 133.900 | 187.471 | 158.022 | 100.793 | 70.546 | 59.588 | 61.379 | 77.315 | 116.891 | 177.484 | 170.132 | 108.841 |
| -22.0 | 58.223 | 64.170 | 85.780 | 133.344 | 186.687 | 156.105 | 99.146 | 69.437 | 58.832 | 60.901 | 77.239 | 117.642 | 178.072 | 166.888 | 105.354 |
| -24.0 | 57.490 | 63.427 | 85.064 | 132.899 | 186.037 | 153.915 | 97.272 | 68.154 | 57.983 | 60.413 | 77.313 | 118.982 | 179.034 | 162.904 | |
| -26.0 | 56.676 | 62.610 | 84.318 | 132.576 | 185.520 | 151.424 | 95.016 | 66.697 | 57.043 | 59.925 | 77.566 | 120.482 | 180.284 | | |
| -28.0 | 55.778 | 61.718 | 83.541 | 132.392 | 185.132 | 148.598 | 92.527 | 65.069 | 56.016 | 59.450 | 78.036 | 123.136 | | | |
| -30.0 | 54.793 | 60.745 | 82.733 | 132.367 | 184.869 | 145.396 | 89.736 | 63.272 | 54.909 | 59.003 | | | | | |

Fig. 2a

EP 0 289 536 B1

KRUEMMUNGSRADIEN IN HORIZONTALER RICHTUNG

| Y[mm] | 0 | 2 | 4 | 6 | 8 | 10 | 12 | 14 | 16 | 18 | 20 | 22 | 24 | 26 | 28 |
|---|---|---|---|---|---|---|---|---|---|---|---|---|---|---|---|
| 30.0 | 89.556 | 89.516 | 89.406 | 89.258 | 89.114 | 89.014 | 88.986 | 89.040 | 89.160 | 89.314 | | | | | |
| 28.0 | 90.207 | 90.167 | 90.058 | 89.911 | 89.767 | 89.667 | 89.638 | 89.690 | 89.808 | 89.960 | 90.102 | 90.192 | | | |
| 26.0 | 90.807 | 90.768 | 90.660 | 90.515 | 90.372 | 90.272 | 90.243 | 90.292 | 90.408 | 90.558 | 90.700 | 90.790 | 90.803 | | |
| 24.0 | 91.357 | 91.318 | 91.213 | 91.071 | 90.931 | 90.832 | 90.802 | 90.849 | 90.962 | 91.109 | 91.249 | 91.340 | 91.355 | 91.288 | |
| 22.0 | 91.856 | 91.819 | 91.717 | 91.580 | 91.445 | 91.349 | 91.318 | 91.363 | 91.471 | 91.613 | 91.749 | 91.839 | 91.856 | 91.793 | 91.668 |
| 20.0 | 92.301 | 92.267 | 92.172 | 92.043 | 91.916 | 91.825 | 91.796 | 91.837 | 91.938 | 92.071 | 92.200 | 92.286 | 92.304 | 92.247 | 92.130 |
| 18.0 | 92.689 | 92.659 | 92.575 | 92.462 | 92.349 | 92.267 | 92.240 | 92.275 | 92.364 | 92.483 | 92.599 | 92.678 | 92.697 | 92.648 | 92.543 |
| 16.0 | 93.012 | 92.989 | 92.924 | 92.836 | 92.748 | 92.683 | 92.659 | 92.684 | 92.753 | 92.847 | 92.941 | 93.008 | 93.027 | 92.991 | 92.908 |
| 14.0 | 93.256 | 93.244 | 93.212 | 93.168 | 93.121 | 93.085 | 93.068 | 93.077 | 93.111 | 93.163 | 93.219 | 93.265 | 93.284 | 93.269 | 93.224 |
| 12.0 | 93.397 | 93.406 | 93.430 | 93.459 | 93.484 | 93.496 | 93.491 | 93.472 | 93.447 | 93.427 | 93.419 | 93.428 | 93.447 | 93.468 | 93.480 |
| 10.0 | 93.397 | 93.441 | 93.558 | 93.713 | 93.860 | 93.954 | 93.968 | 93.900 | 93.774 | 93.632 | 93.517 | 93.464 | 93.485 | 93.568 | 93.681 |
| 8.0 | 93.192 | 93.293 | 93.567 | 93.935 | 94.283 | 94.522 | 94.567 | 94.414 | 94.115 | 93.765 | 93.470 | 93.318 | 93.342 | 93.532 | 93.818 |
| 6.0 | 92.678 | 92.875 | 93.410 | 94.134 | 94.837 | 95.307 | 95.404 | 95.102 | 94.505 | 93.804 | 93.212 | 92.895 | 92.935 | 93.305 | 93.883 |
| 4.0 | 91.701 | 92.052 | 93.013 | 94.327 | 95.618 | 96.491 | 96.670 | 96.105 | 94.997 | 93.709 | 92.831 | 92.059 | 92.131 | 92.806 | 93.870 |
| 2.0 | 90.039 | 90.630 | 92.265 | 94.540 | 96.818 | 98.380 | 98.691 | 97.657 | 95.671 | 93.412 | 91.562 | 90.602 | 90.743 | 91.915 | 93.775 |
| 0.0 | 87.425 | 88.369 | 91.025 | 94.818 | 98.734 | 101.482 | 102.010 | 100.130 | 96.638 | 92.808 | 89.779 | 88.262 | 88.533 | 90.485 | 93.614 |
| -2.0 | 83.629 | 85.051 | 89.140 | 95.225 | 101.822 | 106.631 | 107.518 | 104.090 | 98.035 | 91.753 | 87.034 | 84.783 | 85.276 | 88.370 | 93.433 |
| -4.0 | 78.650 | 80.638 | 86.536 | 95.836 | 106.686 | 115.112 | 116.608 | 110.312 | 99.979 | 90.098 | 83.187 | 80.080 | 80.900 | 85.511 | 93.338 |
| -6.0 | 72.953 | 75.504 | 83.359 | 96.691 | 113.889 | 128.585 | 131.131 | 119.558 | 102.445 | 87.797 | 78.426 | 74.486 | 75.708 | 82.077 | 93.488 |
| -8.0 | 67.524 | 70.521 | 80.106 | 97.707 | 123.260 | 148.025 | 152.237 | 131.672 | 105.030 | 85.059 | 73.448 | 68.877 | 70.505 | 78.588 | 94.073 |
| -10.0 | 63.472 | 66.743 | 77.520 | 98.661 | 132.869 | 170.557 | 176.940 | 143.849 | 108.826 | 82.365 | 69.264 | 64.389 | 66.392 | 75.860 | 95.219 |
| -12.0 | 61.275 | 64.681 | 76.100 | 99.404 | 139.782 | 188.127 | 195.462 | 151.109 | 106.910 | 80.126 | 66.520 | 61.707 | 64.085 | 74.625 | 97.050 |
| -14.0 | 60.377 | 63.860 | 75.627 | 100.064 | 143.616 | 197.001 | 202.782 | 152.039 | 105.306 | 78.259 | 64.934 | 60.513 | 63.432 | 74.992 | 99.839 |
| -16.0 | 59.878 | 63.431 | 75.494 | 100.796 | 146.459 | 202.101 | 204.558 | 149.894 | 102.812 | 76.414 | 63.742 | 59.930 | 63.593 | 76.400 | 103.730 |
| -18.0 | 59.369 | 63.000 | 75.387 | 101.626 | 149.531 | 207.143 | 205.249 | 146.870 | 99.935 | 74.432 | 62.545 | 59.454 | 64.018 | 78.365 | 108.722 |
| -20.0 | 58.791 | 62.507 | 75.254 | 102.567 | 153.094 | 212.839 | 205.550 | 143.320 | 96.775 | 72.307 | 61.288 | 59.006 | 64.623 | 80.838 | 115.735 |
| -22.0 | 58.138 | 61.947 | 75.099 | 103.650 | 157.276 | 219.329 | 205.369 | 139.229 | 93.348 | 70.052 | 59.987 | 58.611 | 65.460 | 83.963 | 122.722 |
| -24.0 | 57.408 | 61.320 | 74.927 | 104.914 | 162.243 | 226.742 | 204.543 | 134.569 | 89.668 | 67.685 | 58.664 | 58.305 | 66.616 | 87.957 | |
| -26.0 | 56.598 | 60.624 | 74.745 | 106.413 | 168.220 | 235.228 | 202.876 | 129.324 | 85.757 | 65.230 | 57.344 | 58.138 | 68.208 | | |
| -28.0 | 55.705 | 59.857 | 74.561 | 108.217 | 175.523 | 244.947 | 200.134 | 123.489 | 81.642 | 62.710 | 56.051 | 58.173 | | | |
| -30.0 | 54.724 | 59.016 | 74.387 | 110.422 | 184.609 | 256.055 | 196.053 | 117.080 | 77.356 | 60.157 | | | | | |

Fig. 2b

EP 0 289 536 B1

PFEILHOEHEN [mm]

| Y[mm] | 0 | 2 | 4 | 6 | 8 | 10 | 12 | 14 | 16 | 18 | 20 | 22 | 24 | 26 | 28 | 30 | 32 | 34 | 36 |
|---|---|---|---|---|---|---|---|---|---|---|---|---|---|---|---|---|---|---|---|
| 30.0 | -4.9301 | -5.0024 | -5.0695 | -5.1815 | -5.3337 | -5.5412 | -5.7895 | -6.0837 | -6.4243 | -6.8114 | | | | | | | | | |
| 28.0 | -4.3277 | -4.3493 | -4.4164 | -4.5276 | -4.6836 | -4.8847 | -5.1311 | -5.4232 | -5.7612 | -6.1459 | -6.5777 | -7.0576 | | | | | | | |
| 26.0 | -3.7240 | -3.7460 | -3.8122 | -3.9226 | -4.0776 | -4.2773 | -4.5220 | -4.8121 | -5.1474 | -5.5291 | -5.9586 | -6.4351 | -6.9601 | | | | | | |
| 24.0 | -3.1630 | -3.1899 | -3.2557 | -3.3654 | -3.5195 | -3.7179 | -3.9612 | -4.2494 | -4.5831 | -4.9626 | -5.3887 | -5.8621 | -6.3836 | -6.9541 | | | | | |
| 22.0 | -2.6590 | -2.6805 | -2.7462 | -2.8553 | -3.0085 | -3.2053 | -3.4477 | -3.7343 | -4.0660 | -4.4434 | -4.8670 | -5.3376 | -5.8560 | -6.4231 | -7.0396 | | | | |
| 20.0 | -2.1961 | -2.2177 | -2.2828 | -2.3914 | -2.5438 | -2.7401 | -2.9807 | -3.2659 | -3.5959 | -3.9713 | -4.3927 | -4.8609 | -5.3765 | -5.9404 | -6.5535 | -7.2168 | | | |
| 18.0 | -1.7786 | -1.8001 | -1.8649 | -1.9731 | -2.1248 | -2.3202 | -2.5597 | -2.8435 | -3.1720 | -3.5457 | -3.9651 | -4.4310 | -4.9441 | -5.5053 | -6.1154 | -6.7753 | | | |
| 16.0 | -1.4059 | -1.4274 | -1.4920 | -1.5997 | -1.7508 | -1.9454 | -2.1839 | -2.4665 | -2.7937 | -3.1658 | -3.5835 | -4.0475 | -4.5584 | -5.1171 | -5.7245 | -6.3815 | -7.0892 | | |
| 14.0 | -1.0776 | -1.0990 | -1.1634 | -1.2708 | -1.4214 | -1.6153 | -1.8529 | -2.1344 | -2.4604 | -2.8312 | -3.2474 | -3.7097 | -4.2188 | -4.7751 | -5.3803 | -6.0367 | -6.7396 | | |
| 12.0 | -0.7932 | -0.8146 | -0.8789 | -0.9860 | -1.1361 | -1.3294 | -1.5662 | -1.8468 | -2.1717 | -2.5414 | -2.9564 | -3.4173 | -3.9247 | -4.4794 | -5.0823 | -5.7344 | -6.4369 | -7.1911 | |
| 10.0 | -0.5523 | -0.5737 | -0.6380 | -0.7450 | -0.8948 | -1.0875 | -1.3236 | -1.6033 | -1.9273 | -2.2961 | -2.7101 | -3.1699 | -3.6761 | -4.2292 | -4.8302 | -5.4803 | -6.1807 | -6.9329 | |
| 8.0 | -0.3548 | -0.3763 | -0.4404 | -0.5474 | -0.6972 | -0.8895 | -1.1248 | -1.4037 | -1.7269 | -2.0950 | -2.5084 | -2.9675 | -3.4726 | -4.0245 | -4.6239 | -5.2722 | -5.9709 | -6.7213 | |
| 6.0 | -0.2008 | -0.2222 | -0.2867 | -0.3940 | -0.5435 | -0.7356 | -0.9700 | -1.2480 | -1.5705 | -1.9380 | -2.3511 | -2.8100 | -3.3146 | -3.8654 | -4.4634 | -5.1101 | -5.8072 | -6.5565 | |
| 4.0 | -0.0898 | -0.1115 | -0.1766 | -0.2844 | -0.4341 | -0.6256 | -0.8593 | -1.1364 | -1.4581 | -1.8254 | -2.2387 | -2.6978 | -3.2024 | -3.7525 | -4.3491 | -4.9942 | -5.6900 | -6.4386 | -7.2412 |
| 2.0 | -0.0226 | -0.0443 | -0.1108 | -0.2196 | -0.3697 | -0.5609 | -0.7936 | -1.0694 | -1.3903 | -1.7576 | -2.1716 | -2.6313 | -3.1370 | -3.6867 | -4.2820 | -4.9253 | -5.6198 | -6.3632 | -7.1718 |
| 0.0 | 0.0000 | -0.0228 | -0.0904 | -0.2008 | -0.3519 | -0.5427 | -0.7739 | -1.0480 | -1.3677 | -1.7353 | -2.1510 | -2.6133 | -3.1200 | -3.6698 | -4.2636 | -4.9046 | -5.5974 | -6.3464 | -7.1524 |
| -2.0 | -0.0232 | -0.0470 | -0.1171 | -0.2302 | -0.3823 | -0.5731 | -0.8022 | -1.0737 | -1.3920 | -1.7603 | -2.1786 | -2.6445 | -3.1539 | -3.7041 | -4.2941 | -4.9343 | -5.6255 | -6.3752 | -7.1850 |
| -4.0 | -0.0943 | -0.1196 | -0.1933 | -0.3104 | -0.4652 | -0.6550 | -0.8812 | -1.1491 | -1.4654 | -1.8346 | -2.2570 | -2.7281 | -3.2416 | -3.7929 | -4.3827 | -5.0173 | -5.7062 | -6.4573 | -7.2727 |
| -6.0 | -0.2166 | -0.2437 | -0.3222 | -0.4445 | -0.6024 | -0.7916 | -1.0141 | -1.2775 | -1.5912 | -1.9618 | -2.3893 | -2.8673 | -3.3863 | -3.9393 | -4.5263 | -5.1573 | -5.8437 | -6.5963 | |
| -8.0 | -0.3940 | -0.4234 | -0.5072 | -0.6352 | -0.7966 | -0.9852 | -1.2039 | -1.4626 | 738 | -2.1460 | -2.5793 | -3.0649 | -3.5900 | -4.1453 | -4.7310 | -5.3580 | -6.0427 | -6.7984 | |
| -10.0 | -0.6315 | -0.6626 | -0.7510 | -0.8841 | -1.0485 | -1.2370 | -1.4528 | -1.7081 | .0178 | -2.3919 | -2.8304 | -3.3227 | -3.8533 | -4.4113 | -4.7969 | -5.5223 | -6.3077 | -7.0670 | |
| -12.0 | -0.9331 | -0.9653 | -1.0564 | -1.1927 | -1.3592 | -1.5482 | -1.7632 | -2.0174 | -2.3272 | -2.7035 | -3.1440 | -3.6431 | -4.1782 | -4.7394 | -5.3271 | -5.9549 | -6.5426 | -7.4064 | |
| -14.0 | -1.3019 | -1.3346 | -1.4270 | -1.5647 | -1.7327 | -1.9237 | -2.1385 | -2.3937 | -2.7050 | -3.0837 | -3.5295 | -4.0305 | -4.5694 | -5.1344 | -5.7258 | -6.3575 | -7.0499 | | |
| -16.0 | -1.7393 | -1.7723 | -1.8659 | -2.0047 | -2.1739 | -2.3652 | -2.5824 | -2.8394 | -3.1530 | -3.5347 | -3.9839 | -4.4887 | -5.0317 | -5.6003 | -6.1966 | -6.8333 | -7.5315 | | |
| -18.0 | -2.2485 | -2.2817 | -2.3756 | -2.5155 | -2.6850 | -2.8737 | -3.0976 | -3.3567 | -3.6731 | -4.0581 | -4.5113 | -5.0204 | -5.5673 | -6.1414 | -6.7421 | -7.3844 | | | |
| -20.0 | -2.8296 | -2.8632 | -2.9580 | -3.0992 | -3.2710 | -3.4653 | -3.6860 | -3.9475 | -4.2670 | -4.6560 | -5.1138 | -5.6277 | -6.1800 | -6.7584 | -7.3645 | -8.0132 | | | |
| -22.0 | -3.4856 | -3.5195 | -3.6153 | -3.7579 | -3.9313 | -4.1273 | -4.3499 | -4.6140 | -4.9372 | -5.3303 | -5.7933 | -6.3131 | -6.8706 | -7.4543 | -8.0662 | | | | |
| -24.0 | -4.2188 | -4.2532 | -4.3501 | -4.4943 | -4.6694 | -4.8671 | -5.0920 | -5.3591 | -5.6863 | -6.0852 | -6.5542 | -7.0795 | -7.6427 | -8.2321 | | | | | |
| -26.0 | -5.0324 | -5.0673 | -5.1655 | -5.3114 | -5.4883 | -5.6880 | -5.9152 | -6.1857 | -6.5177 | -6.9225 | -7.3981 | -7.9301 | -8.4996 | | | | | | |
| -28.0 | -5.9298 | -5.9653 | -6.0650 | -6.2128 | -6.3917 | -6.5934 | -6.8233 | -7.0975 | -7.4349 | -7.8465 | -8.3297 | -8.8690 | | | | | | | |
| -30.0 | -6.9153 | -6.9513 | -7.0527 | -7.2026 | -7.3837 | -7.5877 | -7.8204 | -8.0990 | -8.4424 | -8.8618 | | | | | | | | | |

Fig. 3a

EP 0 289 536 B1

PFEILHOEHEN [mm]

| Y[mm] | 0 | 2 | 4 | 6 | 8 | 10 | 12 | 14 | 16 | 18 | 20 | 22 | 24 | 26 | 28 | 30 | 32 | 34 | 36 |
|---|---|---|---|---|---|---|---|---|---|---|---|---|---|---|---|---|---|---|---|
| 30.0 | -4.9301 | -5.0024 | -5.0695 | -5.1814 | -5.3385 | -5.5410 | -5.7893 | -6.0833 | -6.4249 | -6.8131 | | | | | | | | | |
| 28.0 | -4.3277 | -4.3498 | -4.4164 | -4.5275 | -4.6835 | -4.8845 | -5.1309 | -5.4233 | -5.7618 | -6.1472 | -6.5798 | -7.0603 | | | | | | | |
| 26.0 | -3.7240 | -3.7460 | -3.8121 | -3.9225 | -4.0774 | -4.2771 | -4.5219 | -4.8122 | -5.1485 | -5.5311 | -5.9607 | -6.4379 | -6.9633 | | | | | | |
| 24.0 | -3.1680 | -3.1899 | -3.2557 | -3.3654 | -3.5193 | -3.7178 | -3.9610 | -4.2496 | -4.5837 | -4.9640 | -5.3908 | -5.8649 | -6.3869 | -6.9577 | | | | | |
| 22.0 | -2.6590 | -2.6808 | -2.7461 | -2.8553 | -3.0083 | -3.2057 | -3.4476 | -3.7345 | -4.0667 | -4.4443 | -4.8691 | -5.3405 | -5.8594 | -6.4263 | -7.0436 | | | | |
| 20.0 | -2.1961 | -2.2177 | -2.2828 | -2.3914 | -2.5437 | -2.7400 | -2.9807 | -3.2661 | -3.5966 | -3.9727 | -4.3949 | -4.8637 | -5.3798 | -5.9441 | -6.5576 | -7.2213 | | | |
| 18.0 | -1.7786 | -1.8001 | -1.8649 | -1.9730 | -2.1247 | -2.3202 | -2.5598 | -2.8438 | -3.1728 | -3.5471 | -3.9672 | -4.4338 | -4.9475 | -5.5091 | -6.1195 | -6.7799 | | | |
| 16.0 | -1.4059 | -1.4274 | -1.4920 | -1.5997 | -1.7508 | -1.9455 | -2.1841 | -2.4670 | -2.7946 | -3.1673 | -3.5856 | -4.0502 | -4.5617 | -5.1209 | -5.7287 | -6.3862 | -7.0945 | | |
| 14.0 | -1.0776 | -1.0990 | -1.1634 | -1.2708 | -1.4215 | -1.6155 | -1.8533 | -2.1352 | -2.4615 | -2.8328 | -3.2495 | -3.7123 | -4.2219 | -4.7790 | -5.3845 | -6.0395 | -6.7451 | | |
| 12.0 | -0.7932 | -0.8146 | -0.8789 | -0.9861 | -1.1364 | -1.3299 | -1.5670 | -1.8479 | -2.1731 | -2.5431 | -2.9584 | -3.4197 | -3.9276 | -4.4829 | -5.0865 | -5.7394 | -6.4427 | -7.1976 | |
| 10.0 | -0.5523 | -0.5738 | -0.6380 | -0.7451 | -0.8952 | -1.0884 | -1.3249 | -1.6050 | -1.9292 | -2.2980 | -2.7120 | -3.1719 | -3.6784 | -4.2322 | -4.8343 | -5.4855 | -6.1869 | -6.9397 | |
| 8.0 | -0.3548 | -0.3763 | -0.4407 | -0.5479 | -0.6980 | -0.8910 | -1.1270 | -1.4064 | -1.7297 | -2.0973 | -2.5101 | -2.9687 | -3.4740 | -4.0268 | -4.6277 | -5.2777 | -5.9777 | -6.7287 | |
| 6.0 | -0.2006 | -0.2222 | -0.2869 | -0.3945 | -0.5448 | -0.7379 | -0.9736 | -1.2523 | -1.5745 | -1.9410 | -2.3525 | -2.8101 | -3.3144 | -3.8664 | -4.4667 | -5.1160 | -5.8150 | -6.5648 | |
| 4.0 | -0.0898 | -0.1116 | -0.1768 | -0.2852 | -0.4363 | -0.6297 | -0.8653 | -1.1433 | -1.4643 | -1.8294 | -2.2395 | -2.6959 | -3.1996 | -3.7513 | -4.3515 | -5.0007 | -5.6994 | -6.4484 | -7.2438 |
| 2.0 | -0.0226 | -0.0448 | -0.1112 | -0.2210 | -0.3734 | -0.5674 | -0.8032 | -1.0803 | -1.3999 | -1.7631 | -2.1715 | -2.6267 | -3.1299 | -3.6814 | -4.2827 | -4.9327 | -5.6318 | -6.3804 | -7.1796 |
| 0.0 | 0.0000 | -0.0228 | -0.0909 | -0.2031 | -0.3577 | -0.5534 | -0.7892 | -1.0652 | -1.3826 | -1.7432 | -2.1493 | -2.6030 | -3.1059 | -3.6588 | -4.2614 | -4.9133 | -5.6137 | -6.3625 | -7.1606 |
| -2.0 | -0.0232 | -0.0471 | -0.1179 | -0.2337 | -0.3919 | -0.5899 | -0.8261 | -1.1005 | -1.4148 | -1.7716 | -2.1743 | -2.6261 | -3.1291 | -3.6839 | -4.2897 | -4.9449 | -5.6477 | -6.3972 | -7.1939 |
| -4.0 | -0.0943 | -0.1197 | -0.1946 | -0.3158 | -0.4790 | -0.6804 | -0.9172 | -1.1894 | -1.4991 | -1.8505 | -2.2486 | -2.6979 | -3.2014 | -3.7595 | -4.3703 | -5.0307 | -5.7372 | -6.4877 | -7.2826 |
| -6.0 | -0.2166 | -0.2439 | -0.3240 | -0.4522 | -0.6222 | -0.8279 | -1.0655 | -1.3346 | -1.6383 | -1.9827 | -2.3749 | -2.8214 | -3.3260 | -3.8889 | -4.5069 | -5.1745 | -5.8859 | -6.6377 | |
| -8.0 | -0.3940 | -0.4235 | -0.5095 | -0.6455 | -0.8229 | -1.0334 | -1.2717 | -1.5372 | -1.8342 | -2.1709 | -2.5568 | -3.0005 | -3.5069 | -4.0760 | -4.7028 | -5.3791 | -6.0964 | -6.8493 | |
| -10.0 | -0.6315 | -0.6623 | -0.7533 | -0.8965 | -1.0802 | -1.2947 | -1.5335 | -1.7958 | -2.0870 | -2.4171 | -2.7980 | -3.2400 | -3.7491 | -4.3243 | -4.9605 | -5.6451 | -6.3675 | -7.1214 | |
| -12.0 | -0.9331 | -0.9655 | -1.0595 | -1.2062 | -1.3936 | -1.6102 | -1.8490 | -2.1092 | -2.3969 | -2.7235 | -3.1023 | -3.5446 | -4.0569 | -4.6383 | -5.2807 | -5.9714 | -6.6975 | -7.4509 | |
| -14.0 | -1.3019 | -1.3343 | -1.4301 | -1.5783 | -1.7670 | -1.9843 | -2.2227 | -2.4813 | -2.7632 | -3.0941 | -3.4734 | -3.9173 | -4.4336 | -5.0193 | -5.6659 | -6.3594 | -7.0865 | | |
| -16.0 | -1.7398 | -1.7730 | -1.8689 | -2.0179 | -2.2071 | -2.4244 | -2.6622 | -2.9206 | -3.2067 | -3.5333 | -3.9144 | -4.3620 | -4.8817 | -5.4713 | -6.1206 | -6.8153 | -7.5418 | | |
| -18.0 | -2.2485 | -2.2819 | -2.3785 | -2.5283 | -2.7180 | -2.9351 | -3.1724 | -3.4302 | -3.7163 | -4.0439 | -4.4274 | -4.8790 | -5.4033 | -5.9970 | -6.6491 | -7.3446 | | | |
| -20.0 | -2.8296 | -2.8634 | -2.9609 | -3.1115 | -3.3017 | -3.5188 | -3.7556 | -4.0128 | -4.2990 | -4.6280 | -5.0148 | -5.4708 | -6.0003 | -6.5987 | -7.2539 | -7.9502 | | | |
| -22.0 | -3.4856 | -3.5197 | -3.6181 | -3.7698 | -3.9607 | -4.1777 | -4.4139 | -4.6704 | -4.9571 | -5.2880 | -5.6745 | -6.1398 | -6.6752 | -7.2788 | -7.9372 | | | | |
| -24.0 | -4.2188 | -4.2534 | -4.3528 | -4.5058 | -4.6974 | -4.9144 | -5.1500 | -5.4062 | -5.6932 | -6.0264 | -6.4214 | -6.8888 | -7.4308 | -8.0400 | | | | | |
| -26.0 | -5.0324 | -5.0675 | -5.1681 | -5.3224 | -5.5148 | -5.7318 | -5.9668 | -6.2225 | -6.5103 | -6.8464 | -7.2466 | -7.7209 | -8.2703 | | | | | | |
| -28.0 | -5.9298 | -5.9654 | -6.0675 | -6.2232 | -6.4166 | -6.6336 | -6.8678 | -7.1231 | -7.4120 | -7.7516 | -8.1579 | -8.6401 | | | | | | | |
| -30.0 | -6.9153 | -6.9515 | -7.0551 | -7.2125 | -7.4068 | -7.6237 | -7.8572 | -8.1121 | -8.4024 | -8.7463 | | | | | | | | | |

Fig. 3b

Fig. 4

EP 0 289 536 B1

FIG. 5